# EUROPEAN PATENT APPLICATION

(11) **EP 4 835 326 A1**
(43) Date of publication of application: **04.11.2026**
(21) Application number: 26171082.6
(22) Date of filing: 08.04.2026
(51) Int. Cl.: F16H 48/16, F16D 27/10, F16D 41/08, F16H 48/20, F16H 48/38, F16H 48/40, F16D 27/00, F16D 41/04, F16D 41/06, F16D 41/10, F16D 41/20, F16D 41/064

(54) **OVERRUNNING GEAR RATIO FRONT DRIVE DIFFERENTIAL**

(30) Priority: 17.04.2025 US 202563790158 P
(71) Applicant: The Hilliard Corporation, Elmira NY 14902-1504 (US)
(72) Inventor: Knickerbocker, Howard J, Cameron Mills, NY 14820 (US); Bennett, Kevin, Elmira, NY 14901 (US); Palmer, James E, Elmira Heights, NY 14903 (US); Heath, Kelly P, Corning, NY 14830 (US)
(74) Representative: Murgitroyd & Company

(57) **Abstract**

A positive drive differential is disclosed that includes an input pinion within a pinion gear located within a differential housing. A bi-directional overrunning clutch assembly is located within the differential housing and configured to engage with at least one drive axle segment to transmit torque. The clutch assembly includes a clutch housing, a roller clutch assembly radially inward from an inner surface of the clutch housing. The roller clutch assembly includes a roll cage, a plurality of rolls and at least one spring biasing roll against radially outward movement. A drag mechanism is positioned against and coupled to the roll cage. Two hubs are located radially inward of the roller clutch assembly. Each hub has a contoured exterior surface with a plurality of recessed channels spaced about the circumference of the exterior portion. A land is located between adjacent channels. During overrunning the rolls cycle overtop of the lands.

## Description

### Related Application

This application is related to and claims priority from United States Provisional Application 63/790,158 titled "Overrunning Gear Ratio Front Drive Differential" filed on April 17, 2025, the disclosure of which is incorporated herein by reference in its entirety.

### Field of the Invention

The present disclosure relates to a differential for a four wheel drive system and, more specifically, to a front drive differential with an overrunning drive feature.

### Background

There have been many developments in recent years in drive systems for four wheel drive and all-wheel drive vehicles. Many of the developments have been directed to increasing or maintaining torque on all the wheels. In a basic drive system, a drive shaft is connected to a drive axle which drives two wheels, one at each end of the axle. Because the wheels are on a common drive axle, they rotate at the same rate. A problem occurs when the vehicle enters into a turn. During a turn, the outer wheel travels a greater distance than the inner wheel in the same amount of time. As such, the outer wheel must rotate faster than the inner wheel during the turn. This requires differential rotation. When the outer and inner wheels are fixed to a common axle, however, differential rotation is not permitted. The result is that either the inner wheel is driven faster or the outer wheel is driven slower than is optimum for the speed of the vehicle. In either case, cornering the equipment requires one of the wheels to slip or skid. That results in premature wear of the wheel.

To address this issue, drive systems generally include a differential between the pair of drive wheels. The differential permits independent or differential rotation of the drive wheels on an axle when the user corners. Many drive systems with differentials use some form of an overrunning clutch to transmit torque when needed to a driven shaft, while allowing a wheel to turn faster than the motor drive when necessary.

Commonly assigned U.S. Patent Nos. 6,722,484 and 5,971,123 describe a bi-directional overrunning clutch that allows the motor to drive both wheels in either direction when proceeding in a straight line, and on corners allows the power to be directed to drive the slower (inside) wheel, while allowing the outside wheel to turn faster, without the need for a complex differential. U.S. Patent Nos. 6,722,484 5,971,123.are incorporated herein by reference in their entireties. The clutch disclosed in U.S. Patent Nos. 6,722,484 and 5,971,123 has proven very satisfactory. However, there is still room for further improvement.

Commonly assigned U.S. Patent No. 9,856,930 describes a bi-directional overrunning clutch differential for use with a drive axle which incorporates an outer spring to urge rolls of the bi-directional overrunning clutch into engagement with recesses formed on hubs connected or connectible to the drive axles. U.S. Patent No. 9,856,930 is incorporated herein by reference in its entirety.

Commonly assigned U.S. Patent Application Publication No. 2024/0262191 discloses a positive drive differential that includes two roll cage assemblies arranged to independently overrun. The cages of the two assemblies are connected to one another through a coupler that is configured to prevent reverse engagement of the roll cages. U.S. Patent Application Publication No. 2024/0262191 is incorporated herein by reference in its entirety.

While the above solutions provide beneficial mechanisms for controlling torque transfer in a front wheel drive system, additional improvements would be beneficial.

### Summary of the Invention

A front drive differential for a vehicle, and preferably a four wheel drive vehicle. The front drive differential includes a differential housing with an input pinion having a pinion gear located within the differential housing and a pinion input shaft attached to the pinion gear. The pinion input shaft extends out of an opening in the differential housing. The pinion input shaft is configured to operably engage with a drive shaft so as to permit the drive shaft to rotate the pinion shaft. A ring gear is engaged to the pinion gear.

A bi-directional overrunning clutch assembly is located within the differential housing and is configured to engage with at least one drive axle segment and more preferably two drive axle segments. The bi-directional overrunning clutch assembly is arranged to transmit torque, when engaged, between the pinion gear and the drive axle segments.

The bi-directional overrunning clutch assembly includes a clutch housing attached to or formed integral with the ring gear such that the ring gear is positioned radially outward from an inner surface of the clutch housing. At least a portion of the inner surface of the clutch housing has a contoured surface. The clutch housing has a clutch housing axis about which it rotates.

A roller clutch assembly is located radially inward from the inner surface of the clutch housing. The roller clutch assembly includes a roll cage with a plurality of spaced apart slots that extend radially through the roll cage from its outer surface to its inner surface. The slots are located circumferentially around the roll cage. The roll cage has a roll cage axis about which the roll cage rotates. The roll cage axis is coaxial with the clutch housing axis.

The roller clutch assembly includes a plurality of rolls with each roll located in one of the slots of the roll cage. The rolls and slots are sized so that each roll can move within the each slot in the circumferential direction about the roll cage axis. At least one spring biases each roll against movement radially outward relative to the slot.

A drag mechanism is positioned adjacent and coupled to the roll cage. The drag mechanism is configured to index the roll cage so as to prevent binding.

Two hubs are located radially inward of the roller clutch assembly and axially aligned with one another so as to rotate about a common longitudinal axis which is coaxial with the roll cage axis. Each hub is configured to engage with an end of a corresponding drive axle segment. Each hub is also located radially inward from a plurality of the rolls. Each hub has a contoured exterior portion with a plurality of recessed channels formed on the contoured exterior portion of each hub. Each recessed channel extends axially along the contoured exterior portion parallel to the longitudinal axis of the associated hub and is sized so that a portion of each roll can seat within a corresponding recessed channel. The recessed channels are spaced about the circumference of the contoured exterior portion of each hub. The contoured exterior portion includes a plurality of lands. Each land is located between adjacent channels on the associated hub.

The spring biases each roll into one of the recessed channels when the roll is not overrunning, thereby providing a connection between the rolls and the associated hub so as to cause the rolls to initially move with the associated hub.

The roll cage is preferably a one-piece roll cage.

In an embodiment, the drag mechanism includes an armature plate that has a plurality of tangs extending radially inward from an outer ring.

At least one tang may include an end portion that is operatively coupled to the roll cage. In an embodiment, the roll cage includes a recess and an end portion of the tang is engaged with the recess of the roll cage.

The roll cage and the drag mechanism preferably rotate in combination.

In an embodiment the contoured surface of the clutch housing includes a first tapered portion that is located on a first side of each roll and a second tapered portion that is located on a second side of each roll opposite the first side. Each slot of the roll cage has a width that is sized so as to permit engagement by each roll on only one tapered portion at a time.

In an embodiment there is at least one protrusion or pin on the clutch housing that extends axially outward from an axial face of the clutch housing and is located such that the tangs of the armature plate will contact the protrusion when the armature plate rotates a predetermined amount relative to the clutch housing.

The protrusion is preferably located so as to limit the rotation of the roll cage relative to the clutch housing by preventing further relative rotation of the armature plate relative to clutch housing.

In an embodiment the drag mechanism further includes a coupler located between the armature plate and the roll cage, and the armature plate is engaged to the roll cage with the coupler located therebetween.

In an embodiment the coupler is annular in shape and includes a plurality of notches that extend radially outward from an inner diameter of the coupler. The notches are preferably spaced circumferentially around the coupler. The roll cage includes a plurality of projections that extend axially outward from a face of the roll cage and spaced circumferentially around the face of the roll cage. At least one projection is located within each notch.

Each notch has a notch width that is larger than the width of each corresponding projection so that the projection can move circumferentially within the corresponding notch thereby permitting rotation of the roll cage relative to the coupler until at least one of the projections contacts a surface of its associated notch.

In an embodiment, at least one tang has an end portion that is engaged with a recess in at least one of the projections.

In an embodiment, the coupler is coupled to the clutch housing such that the coupler rotates with the clutch housing. The coupling may be provided by an extension protruding from a face of the clutch housing toward the armature plate, the extension contacting a surface on the coupler such that the coupler rotates with the clutch housing.

In an embodiment an armature retainer is used to couple the armature plate to the roll cage. The retainer is located adjacent to an axial face of the clutch housing and it is rotatable relative to the clutch housing. The armature plate is coupled to the retainer such that the armature plate rotates with the retainer. A cage plate is also attached to the retainer and is coupled to a face of the roll cage such that rotation of the roll cage causes the retainer to rotate relative to the clutch housing. Pins or projections from the clutch housing limit the rotation of the retainer and, thus, the indexing of the roll cage relative to the clutch housing.

At least one pin extends axially outward from the face of the clutch housing toward the spring retainer. The pin is positioned to contact the spring retainer when the spring retainer rotates a predetermined amount/distance relative to the clutch housing so as to limit rotation of the roll cage.

In an embodiment the drag mechanism further includes an electromagnetic coil which, when energized, drags the roll cage relative to the clutch housing.

In an embodiment, when at least one of the hubs is rotating faster than the clutch housing the rolls associated with that hub are allowed to move out of recessed channels and up over the lands of the exterior contoured surface between adjacent channels.

In an embodiment a differential assembly for a four wheel drive vehicle is disclosed. The four wheel drive vehicle has a front drive axle and a rear drive axle. The front drive axle includes a front drive differential according to any of the embodiments. The front drive differential has a gear ratio that causes the clutch housing to rotate slower than a differential in the rear drive axle.

In an embodiment a four wheel drive vehicle is disclosed that includes a motor operably coupled to a transmission. The transmission is arranged to transmit power from the engine to front and rear drive shafts. The front drive shaft has a first end operably connected to the transmission for receiving rotary motion from the transmission and a second end connected to any of the embodiments of the front drive differential. The front drive differential is operably connected to two front drive axle segments. Each drive axle segment has one end connected to a ground engaging wheel and the opposite end connected to one of the hubs. The front drive differential is operable for transmitting torque from the front drive shaft to the wheels. The rear drive shaft has a first end operably connected to the transmission for receiving rotary motion from the transmission and a second end connected to a rear drive differential. The rear drive differential is operably connected to two rear drive axle segments. Each rear drive axle segment has one end connected to a ground engaging rear wheel and the opposite end connected to the rear drive differential. The rear drive differential is operable for transmitting torque from the rear drive shaft to the rear wheels. In an embodiment the front drive differential has a gear ratio that causes the clutch housing to rotate slower than a ring gear in the rear drive differential.

The foregoing and other features of the invention and advantages of the present invention will become more apparent in light of the following detailed description of the preferred embodiments, as illustrated in the accompanying figures. As will be realized, the invention is capable of modifications in various respects, all without departing from the invention. Accordingly, the drawings and the description are to be regarded as illustrative in nature, and not as restrictive.

### Brief Description of the Drawings

For the purpose of illustrating the invention, the drawings show a form of the invention which is presently preferred. However, it should be understood that this invention is not limited to the precise arrangements and instrumentalities shown in the drawings.
FIG. 1 is a top perspective view of a front drive differential assembly according to the present invention.
FIG. 1A is a schematic view of part of a drive system for a four wheel drive vehicle in accordance with the present invention illustrating the secondary drive axle and wheels.
FIG. 2 is a front view of the differential of FIG. 1 with the differential housing and cover removed.
FIG. 3 is a cross-section of the differential of FIG. 2.
Fig. 4 is a perspective view of an embodiment of the roller assembly.
FIG. 5 is a side view of the roller assembly of FIG. 4.
FIG. 6 is a cross-section of the roller assembly of FIG. 5.
FIG. 7 is a view showing the inner contour of the clutch housing.
FIGS. 8A-8C illustrate different positions or stages of the overrunning clutch. FIG. 8A is the disengaged or overrunning position; FIG.8B is the forward engagement position; and FIG. 8C is the backward engagement position.
FIGS. 9A-9D illustrate various positions of the roll cage, rolls and drag mechanism during operation.

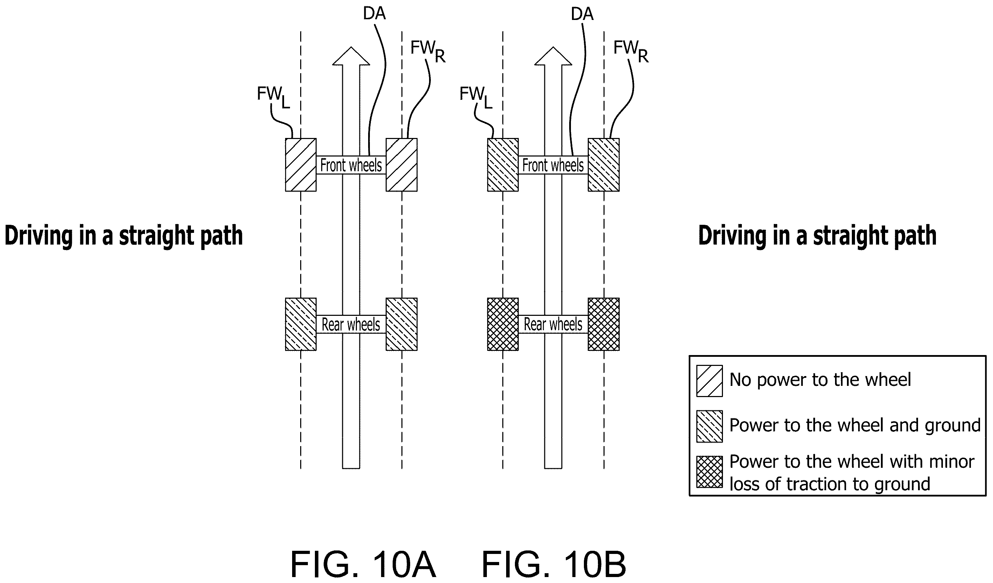

FIG. 10A is a schematic representation of a four wheel drive vehicle according to the present invention with the vehicle driving straight with both rear wheels providing traction. FIG. 10B illustrates the vehicle when the rear wheels lose traction and the front wheels provide traction.
FIG. 11A is a schematic representation of a four wheel drive vehicle according to the present invention with the vehicle driving around a turn with both rear wheels and the inner front wheel providing traction. FIG. 11B illustrates the vehicle when the rear wheels and inner front wheel lose traction, and the outer front wheel provides traction.
FIG. 12 is a perspective view of an alternate embodiment of a drag mechanism for use with the roller assembly and FIG. 12A shows an exploded view of the drag mechanism components of FIG. 12.
FIG. 13 is a front view illustrating the drag mechanism and roller assembly of the embodiment of FIG. 12 with the drag mechanism engaged.
FIG. 13A is an enlarged view of drag mechanism and roller assembly of FIG. 13 with the coupler removed for clarity.
FIG. 14 is a side view of an alternate embodiment of the invention that uses a armature plate retainer for limiting the roll cage rotation. FIG. 14A is a section view of the embodiment taken along lines 14A-14A in FIG. 14. FIG. 14B is a section view of the embodiment taken along lines 14B-14B in FIG. 14. FIG. 14C is a section view of the embodiment taken along lines 14C-14C in FIG. 14.

### Detailed Description of the Embodiments

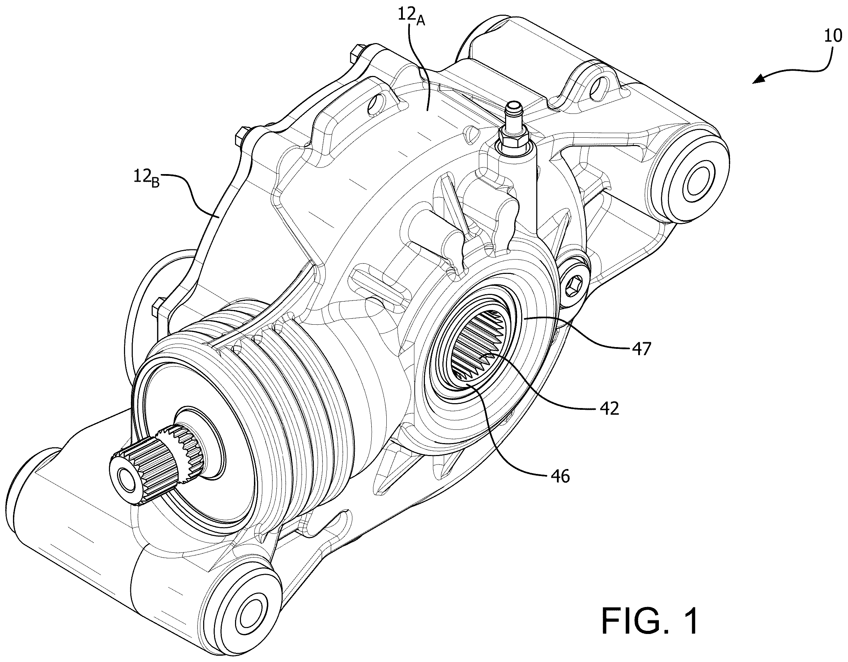

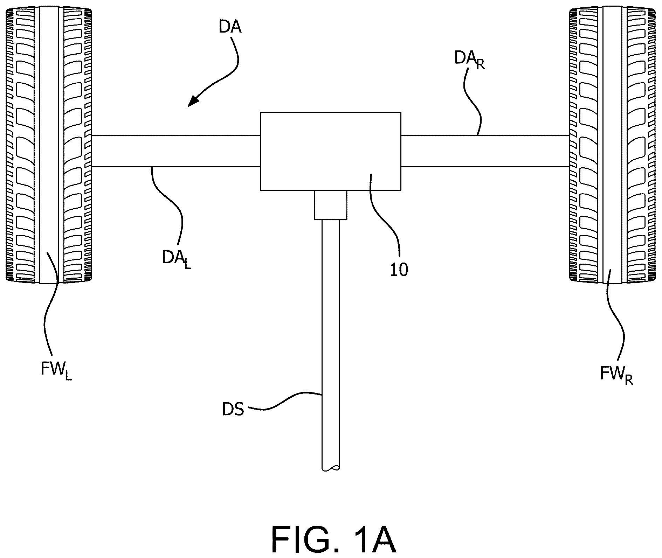

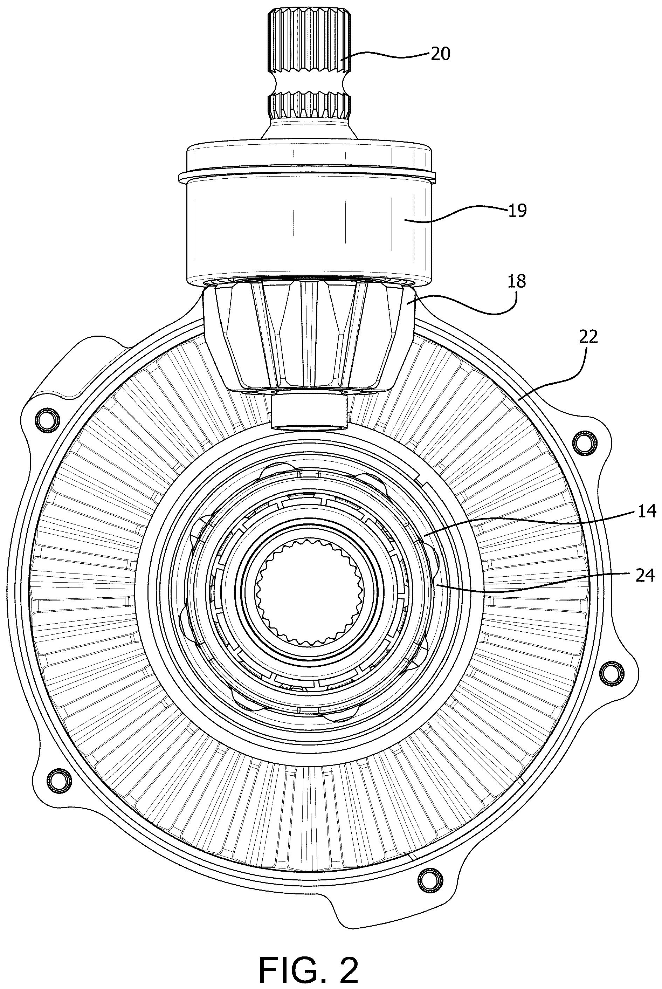

Referring now to the drawings, wherein like reference numerals illustrate corresponding or similar elements throughout the several views, FIGS. 1- 3 illustrate a positive drive differential 10 for engaging with a front drive axle DA (FIG. 1A) on a four wheel drive vehicle. While the drawings and following description describe the invention as part of or in conjunction with the front differential of a front (secondary) drive axle in a four wheel drive vehicle, it could be used on or in conjunction with a rear differential if the rear differential is not part of the primary drive axle (i.e., a front wheel drive vehicle). The positive drive differential includes a differential housing 12 that, in the illustrated embodiment, includes a main housing 12_{A} and a removable cover 12_{B}. A bi-directional overrunning clutch assembly 14 is located within the differential housing 12. As will be described in greater detail, the construction of the clutch 14 facilitates turning of the vehicle by allowing an outer wheel and its associated shaft segment to rotate faster than the inner wheel and its associated shaft segment, which remain positively driven by the motor through the clutch 14. Thus, the clutch 14 permits the outer wheel to independently rotate while the inner wheel continues to be driven by the motor.

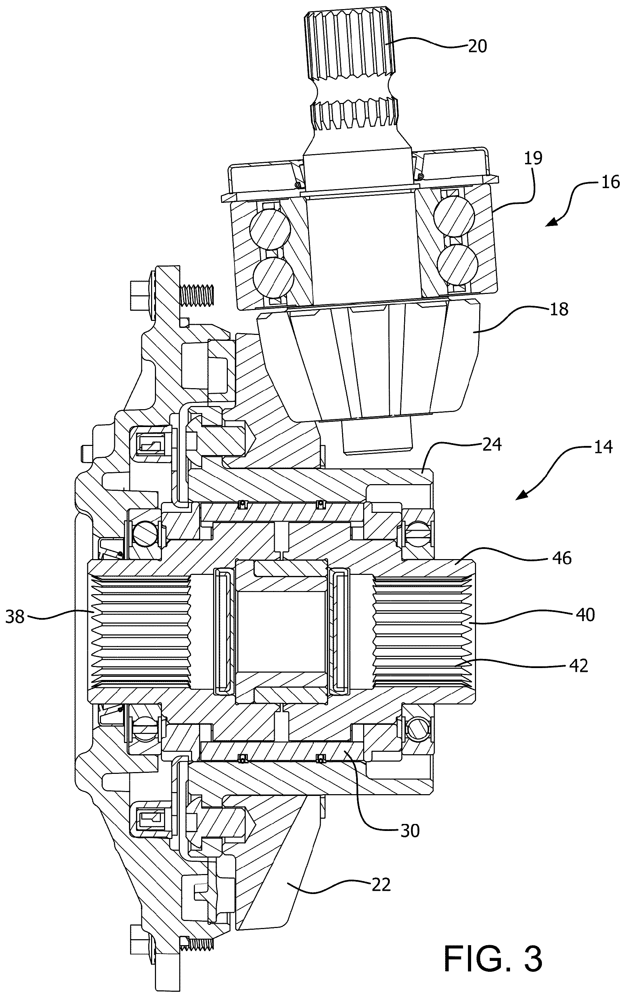

An input pinion 16 (FIG. 3) is located within the differential housing 12. The input pinion includes a pinion gear 18 and a pinion input shaft 20 attached to the pinion gear. The pinion gear is located within the differential housing 12 and the pinion input shaft 20 extends out of an opening in the differential housing 12. A bearing 19 preferably is located between a portion of the input pinion 16 and the differential housing 12 so as to permit the input pinion to rotate with respect to the differential housing. A drive shaft DS (FIG. 1A) attaches to the pinion input shaft 20 of the pinion 16 so as to transmit rotation from the drive shaft DS to the pinion 16 which, in turn, transmits rotation and torque to the bi-directional overrunning clutch assembly 14. The connection between the drive shaft DS and the pinion input shaft 20 can be through any conventional means, but in the illustrated embodiment is a splined connection. The bi-directional overrunning clutch assembly 14 is engaged with two independent drive axle segments DA_{L}, DA_{R} of the drive axle DA for transmitting torque from the bi-directional overrunning clutch assembly 14 to front left and front right wheels FW_{L}, FW_{R}, respectively, as discussed in more detail below.

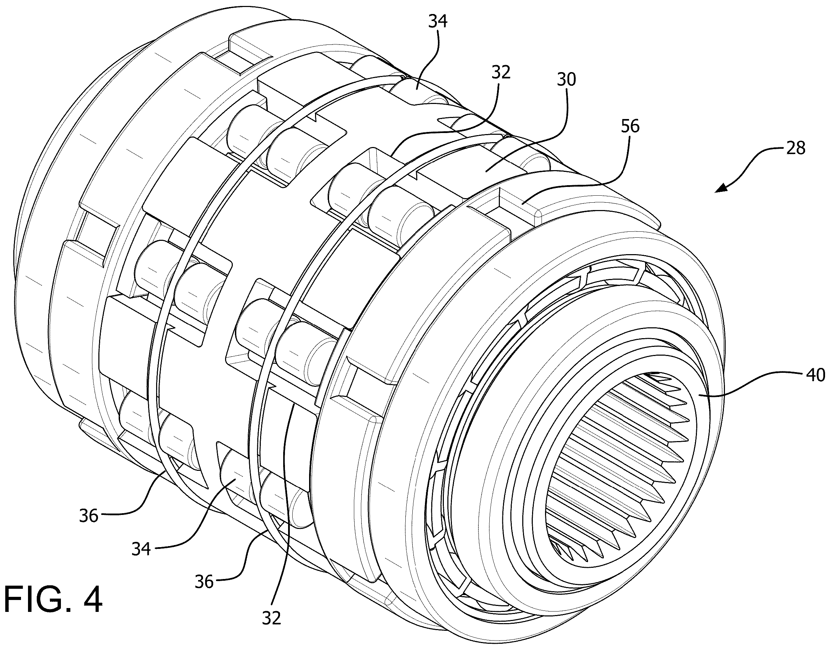

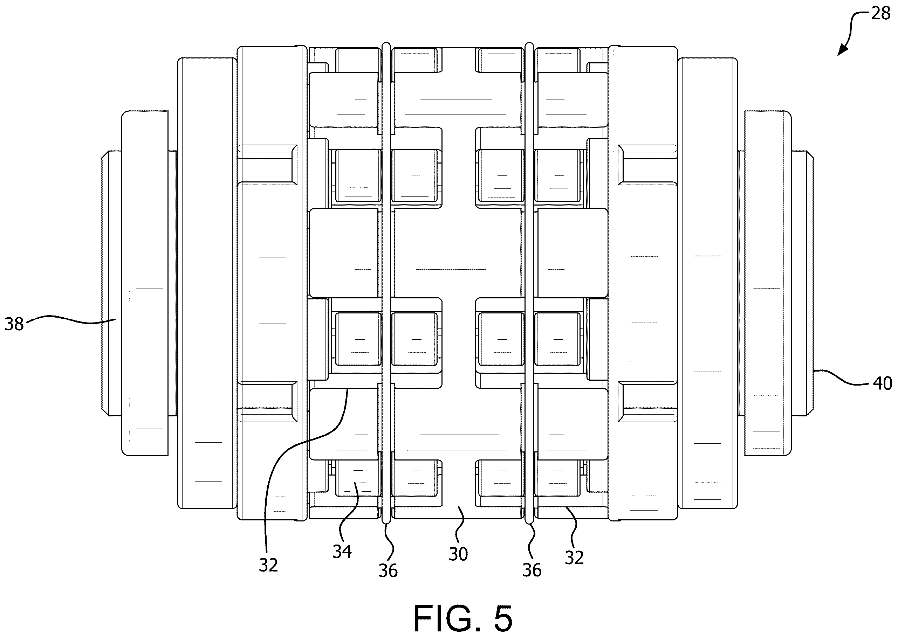

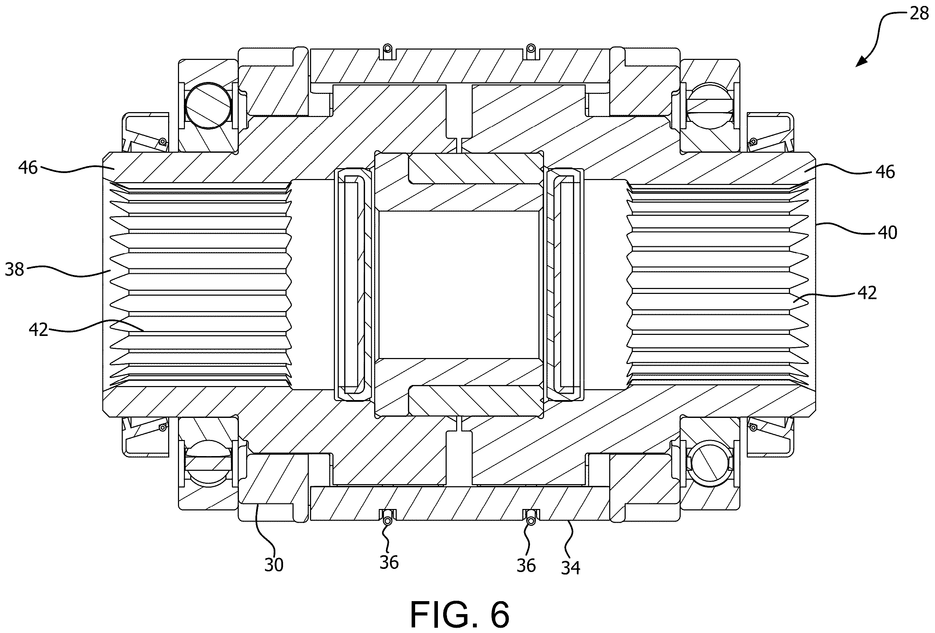

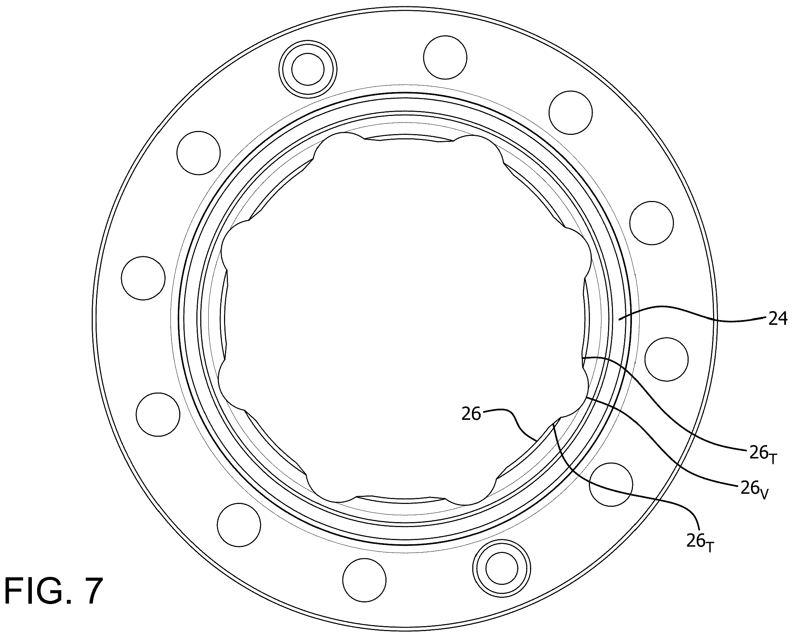

Referring to FIG. 3, a cross-section of the differential 10 (without the housing and cover) is shown and to FIGS. 4 - 6 details of the roller clutch assembly are shown. The pinion gear 18 is positioned within the housing 12 so as to engage with a ring gear 22 in a conventional manner. The ring gear 22 is part of or attached to the bi-directional overrunning clutch assembly 14. In the illustrated embodiment, the ring gear 22 is attached to or formed integral with a clutch housing 24 (Fig. 7). More specifically, the ring gear 22 in one embodiment circumscribes and extends radially outward from an outer periphery of the clutch housing 24. As such, as the pinion 16 rotates, the pinion gear 18 rotates the ring gear 22 which, in turn, rotates the clutch housing 24. The clutch housing 24 include an inner surface 26 that has a cam profile/contoured surface around a portion of its inner periphery. The contoured surface is discussed in greater detail below.

The clutch assembly 14 preferably includes a roller assembly 28 with a single roll cage 30 formed in the shape of a ring with a plurality of slots 32 arranged in two sets. Each set of slots includes a plurality of slots that are spaced circumferentially around the roll cage 30 and extend radially through the roll cage 30 from its outer surface to its inner surface. Each slot includes a roll 34. The roll 34 is sized so that the roll can rotate within the slot 32. As will be discussed below, each slot 32 has a width that is larger than the roll. Each set of slots 32 and rolls 34 is associated with a hub. In the illustrated embodiment there are eight slots 32 in each set of slots 32 with a corresponding roll 34 in each slot. However, the number of rolls 34 can vary depending on many factors, including the size of the differential and the anticipated torque that will be transmitted.

Each roller assembly 28 includes at least two springs 36 that contact the rolls 34 and bias the rolls against radial movement out of the slots 32, one spring 36 associated with each set of slots 32 and corresponding rolls 34. Each spring 36 biases the rolls 34 toward or into the recessed channels 44. As will become apparent below, the springs and rolls permit overrunning when there is a speed differential between the hubs while in a turn. Each spring 36 biases its associated rolls 34 so that they remain seated in the recessed channels 44 on the applicable hub when the hub indexes relative to the clutch housing inner surface 26. As will be discussed in more detail herein, each spring 36 maintains its associated rolls 34 in contact with an outer surface of the associated hub that is connected to the applicable drive axle segments DA_{L}, DA_{R}. In the illustrated embodiment, there is one spring 36 extending around the periphery of the roll cage 30 for each set of slots and rolls. The spring is preferably a garter spring although other springs can be used. To help maintain alignment of the rolls 34 in the slots 32, each roll preferably has an annular groove formed in its periphery in which the spring 36 seats.

Two hubs 38, 40 are located radially inward of the roller clutch assembly 28. The hubs are axially aligned with one another so as to rotate about a common axis. More specifically, one hub is located radially inward from each set of rolls 34. Each hub preferably has a hole in one end of the hub with splines 42 (FIG. 1) formed on an inner surface of the hole, the hole configured to receive a splined end of one of the corresponding drive axle segments DA_{L}, DA_{R}. Of course, the hub may instead include a stub shaft portion with outer splines for engaging with inner splines on a shaft segment. Other types of well-known connections can be substituted for the illustrated splines. The splined connections secure the hubs 38, 40 to the drive axle segments DA_{L}, DA_{R} such that each hub 38, 40 rotates in combination with its associated drive axle segment DA_{L}, DA_{R}. A support is provided between each hub and the differential housing. The support helps maintain the alignment of the hubs while permitting each hub to rotate relative to the differential housing. In one embodiment, the support is provided by end caps or bearings in the main housing 12_{A} and a removable cover 12_{B}.

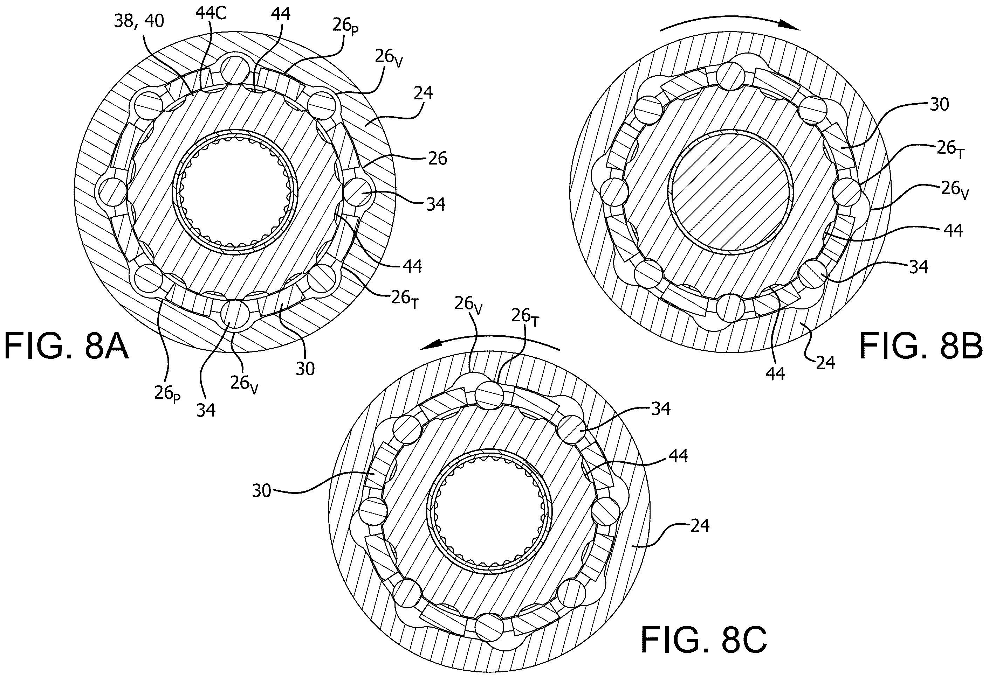

As shown in Fig. 8A, each of the hubs 38, 40 has a contoured or scalloped exterior surface with a series of semicylindrical or curved recessed channels 44 that extend parallel to the axis of the hub. The recessed channels 44 are dimensioned to receive or provide a seat for a portion of each of the rolls 34 so that the rolls 34 can rotate within the recessed channels and spaced equidistant from one another circumferentially about the exterior surface. Thus, the radius of curvature of the recessed channels 44 is the same or slightly larger than the radius of the rolls. The number of recessed channels 44 in each hub 38, 40 is preferably a multiple of the number of rolls 34 in each set so that, in a resting position, all of the rolls 34 are seated in respective ones of the recessed channels 44.

As shown in FIG. 3, each of the hubs 38, 40 includes an axially outer end 46 with an outer surface that is preferably reduced in diameter with respect to the scalloped portion. The reduced diameter portion 46 is preferably sized to extend into or through a central opening 47 in the cover 12_{B} and main housing 12_{A} so as to permit the ends of the drive axle segments to be connected. The axially inward end of one hub 40 preferably has a reduced diameter portion that fits within a recess in the axially inward end of the other hub 38, but permits the hubs to rotate relative to one another. The cover 12_{B} is fastened to the main housing 12_{A} to form the differential housing 12, which may contain grease or other lubricant and may be sealed by O-rings or similar components between the hubs 38, 40 and the different housing 12.

When the vehicle is stationary, i.e., the drive shaft is not rotating the pinion 16 and, thus, no torque is being applied to the differential 10, each roll 34 sits within a recessed channel 44 in its corresponding hub 38, 40. As discussed above the clutch housing 24 has a contoured inner surface 26. More specifically, the contoured inner surface 26 includes a plurality of peaks 26_{P} and valleys 26v. The number of valleys 26v is at least equal in number to the number of rolls 34 in each set. In the resting position shown in FIG. 8A, the rolls 34 are located within the valleys 26v with the contoured surface 26 tapering inward toward the roll cage 30 on either side of the rolls 34 (generally referred to herein as tapered portions 26_{T}). The valleys 26v are sufficiently deep such that when a roll 34 is in the middle of a valley 26v the roll 34 preferably does not touch the contoured surface 26 and can move radially outwards far enough to pass over a cusp 44c between the recessed channel 44 and the adjacent land on the contoured surface. The peaks 26_{P} are sufficiently close to the roll cage 30 such that when the rolls 34 are fully seated in recessed channels 44 in the scalloped surface, the rolls cannot pass under the peaks 26_{P} but, instead, wedge on the tapered portions 26_{T}.

For ease of manufacture and assembly, the contoured surface 26 preferably has n-fold rotational symmetry about the main axis of the clutch, where there are "n" rolls 34 in each set of rolls, and preferably has mirror symmetry about any plane including the axis passing through the center of a peak 26_{P} or valley 26v, and the roll cage 30 and hubs 38, 40 also have the same symmetry. The clutch can then be assembled without requiring any specific alignment of the components. However, since the roll cage 30 cannot rotate relative to the clutch housing more than the width of one valley, the level of symmetry is not essential, and may be departed from for other reasons. In the illustrated embodiment there are eight rolls 34 in each set of rolls. Any desirable number of rolls and corresponding valleys may be used as required by the anticipated torque.

The contoured surface 26 of the clutch housing and the roller assembly 28 provide the bi-directional overrunning capabilities as will be discussed hereinafter. Contoured surfaces and roll cages in overrunning clutches are well known in the art. See, e.g., above-mentioned U.S. Patent Nos. 6,722,484 and 5,971,123. A further detailed discussion of the features of a contoured surface is, therefore, not needed.

In the neutral or resting position shown in FIGS. 8A, the hubs 38, 40 are not engaged to the clutch housing 24 because the rolls 34 are not wedged between the clutch housing 24 and the hubs 38, 40. However, because each spring 36 biases its associated rolls into the recessed channels 44 of the scalloped surfaces of the applicable hubs 38, 40 (Figs. 8B and 8C), the rolls 34 are connected to the hubs 38, 40 causing the rolls 34 to initially move when either hub 38, 40 moves (within the wide slots 32). As a result, any relative motion between the clutch housing 24 and either of the hubs 38, 40 will cause the roller assembly 28 to index or position the rolls 34 for engagement. Hence, although the resting or neutral position of the rolls in the channels theoretically provides no direct torque transfer between the pinion gear 18 and the hubs, in reality, positive drive occurs essentially instantaneously upon any relative movement between the clutch housing and the hubs. For example, in the embodiment illustrated, engagement occurs with very little rear wheel slip which causes relative rotation between the clutch housing and hubs.

Referring to FIG. 8B, as torque is applied, i.e., the clutch housing moves relative to the roll cage, the roller assembly 28 transitions into its forward-engagement position. When the drive system of the vehicle is engaged for forwardly driving the vehicle, the motor causes the clutch housing 24 to rotate with respect to the hubs 38, 40 in the direction of the arrow in FIG. 8B. Because the hubs 38, 40 are engaged to the wheels FW_{L}, FW_{R} through the drive axle segments DA_{L}, DA_{R}, the hubs initially do not move. Since the roll cage 30 is connected to the hubs by the rolls 34 that are held in place by the springs 36, the roll cage 30 and the rolls 34 also remain stationary. As a result, the rolls 34 wedge between the tapered portions 26_{T} of the clutch housing and the hubs 38, 40. (See Figs. 8B and 8C.) The wedging of the rolls 34 provides a path for the transmission of torque from the input pinion gear 18 through the rolls 34 to the hubs 38, 40, and thus to the drive axle DA. See, FIG. 8B. This represents the forward-engagement position of the bi-directional clutch which permits the motor-driven rotation of the hub 38, 40 and the associated drive axle segments DA_{L}, DA_{R} and the wheels FW_{L}, FW_{R}. The opposite motion happens in the reverse direction, for example when the vehicle is in reverse (reverse-engagement position). See, FIG. 8C.

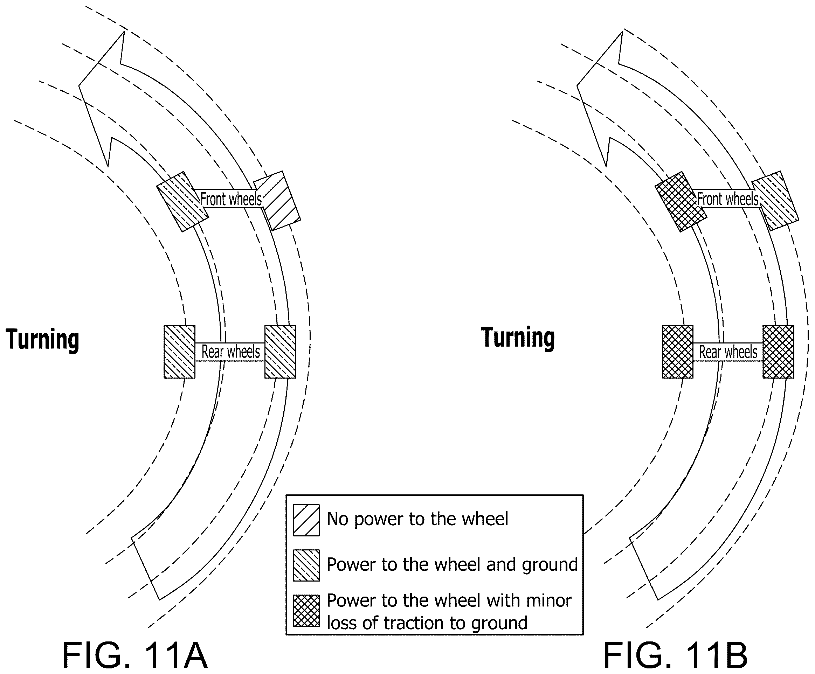

The above-described construction of the bi-directional clutch assembly 14 also allows the drive axle segments DA_{L}, DA_{R} (and, thus, the wheels FW_{L}, FW_{R}) to overrun (disengage) from the forward-engagement position. This is particularly important during turning (FIG. 11A) where it is beneficial to permit one wheel (i.e., the outer wheel) to turn faster than the other wheel (i.e., the inner wheel), while the motor continues to drive the slower wheel, and thus to propel the vehicle. This prevents scuffing and resultant wear of the slower moving wheel. More importantly, the overrunning greatly reduces the effort required to steer the vehicle. The present invention achieves this goal in the drive axle segments DA_{L}, DA_{R} by allowing each hub 38, 40 to overrun separately, i.e., to rotate independent from the clutch housing 24, when the applicable hub 38, 40 rotates faster than the clutch housing 24. Bi-directional overrunning clutches are well known and are described in U.S. Patent Nos. 5,971,123, 6,722,484 and 9,856,930, which are incorporated herein by reference in their entireties. As such, no further discussion is necessary.

As discussed above, in the present invention the bi-directional overrunning clutch assembly 14 includes a single roller assembly 28 shown in FIG. 4, with two sets of rolls 34, one set associated with a corresponding hub and drive axle segment. This allows overrunning of one drive axle segment while maintaining positive driving engagement of the other drive axle segment. For example, as mentioned above and shown in FIG. 11A, when a vehicle travels around a curve, the wheel on the inside of the curve has a shorter distance to travel and, thus, travels at a slower speed, than the wheel on the outside of the curve. Consequently, the drive axle segment, for example DA_{L}, associated with the inside wheel, for example FW_{L}, will continue to be driven, with its respective rolls 34 engaged between the outer surface 44 of the hub 38 and the forward contour surfaces of the inner surface 26 of the housing 24. Meanwhile the other hub, for example hub 40, associated with the outside wheel, for example FW_{R}, is allowed to overrun, turning faster than the housing 24, such that its respective rolls 34 will disengage from wedging between the inner contour surface 26 and the outer surface 44 of the hub 40, thus allowing the hub 40 to freely rotate as it is driven by the outer wheel FW_{R}. When the vehicle returns to a straight path and the speed of the disengaged hub 40 slows down to equal the speed of the housing 24, the rolls 34 surrounding the hub 40 re-engage (wedge) between the forward contour surface 26 and hub 40 so that the hub 40 is once again driven to rotate at the same speed as the housing 24.

The present invention contemplates that the front drive gear ratio is set to be underdriven. That is, the front gear ratio is set such that the front drive clutch rotates slower than the rear drive (underdrive) by at least 2%. As such, the front drive output hubs 38, 40, which are connected to the front wheels FW_{L} and FW_{R}, will rotate at vehicle ground speed, which is faster than the clutch housing. Since the rolls 34 are biased into engagement with the channels 44 of the hubs 38, 40 by the garter springs 36, the hubs 38, 40 will normally attempt to index the cage and rolls to the reverse ramp position (i.e., from the rear tapered portions 26_{T} on one side of the valley 26v to the forward tapered portions 26_{T} on the other side of that valley 26v). That is, since the rolls 34 are secured in the channels 44, as the hub rotates, the rolls 34 will rotate with the hub until they push against the tapered portions 26_{T} of the clutch housing contour. This could result in binding of the driveline (i.e., the rear wheels are rotating the hubs and front wheels at a different speed than the front clutch housing is being driven by its ring gear.).

The present invention addresses this issue by including the one piece roll cage 30 and a drag mechanism 50 that is connected to the roll cage 30 as will be discussed below. In addition, the roll cage 20 includes wider slots 32 that are sized to allow circumferential movement of the rolls 34 in the slots 32 (i.e., movement of rolls circumferentially relative to the roll cage and hub - in and out of the channels 44 and onto lands L located between adjacent channels). The drag mechanism 50 is configured to bias the roll cage 20 to prevent binding. In one embodiment the drag mechanism includes an electromagnetic coil (not shown) and an armature plate as described, for example, in US Patent No. RE38,012, US Patent No. 8,857,294, or US Patent No. 8,840,514, which are all incorporated by reference in their entireties. Other forms of drag mechanisms, for example, in US Patent 10,150,369 or US Patent 11,047,464, incorporated herein by reference in their entireties, can be used in the present invention as would be apparent to those skilled in the art.

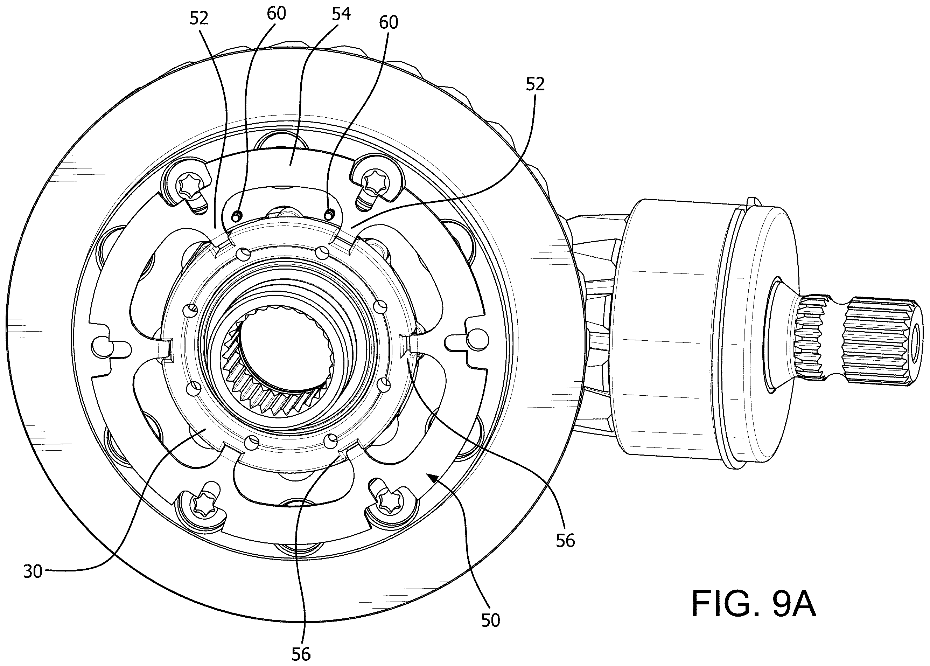

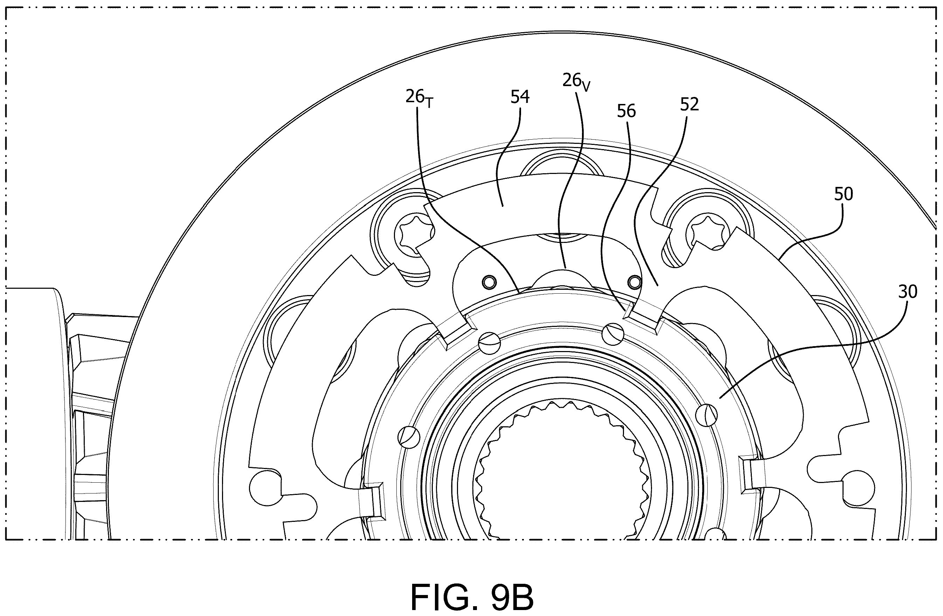

More specifically, referring to FIGS. 9A-9D, the drag mechanism or armature plate 50 is positioned against one face of the roll cage 30. The drag mechanism 50 includes one or more tangs or radial fingers 52 that extend radially inward from an outer ring 54. Each finger 52 includes an end portion that is bent so as to project axially toward the roll cage and engages with a recess or indentation 56 in an end of the roll cage 30. Accordingly, the drag mechanism 50 is coupled to the roll cage 30 so that the two components rotate in combination.

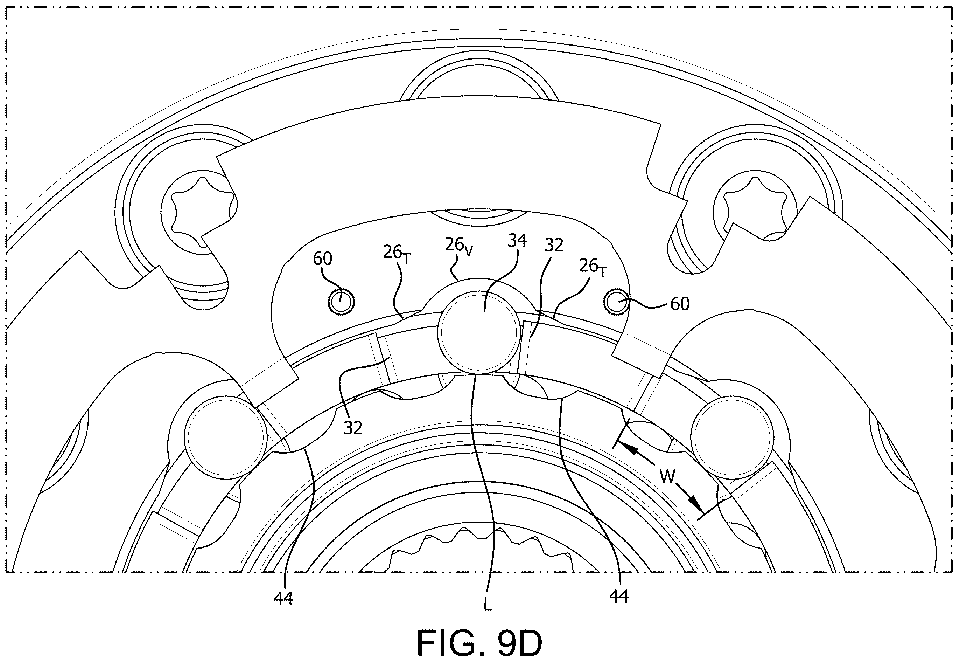

During operation, when one or both of the front hubs 38, 40 begin to rotate faster than the clutch housing (i.e., overrunning condition), since the rolls are seated in the channels 44, the faster running hub(s) push the rolls out of the channel 44 and into the overrunning position relative to the clutch housing, i.e., into the valley 26v of the contoured inner surface 26. This is shown in FIG. 9D. In the overrunning position, the roll is not wedged between the contoured inner surface 26 and the hub 38, 40. Instead, the roll preferably rolls on a land L of the hub between channels 44. The size of the land L is based on several considerations, including the diameter of the roll, which sizes the channel. The number of channels in the hub is based on having a multiple of the total number of rolls so they all have a spot to sit in when engaged. Once the number of channels needed are selected and equally spaced about the hub, the appropriate size of the land L is determined so that the roll can properly overrun.

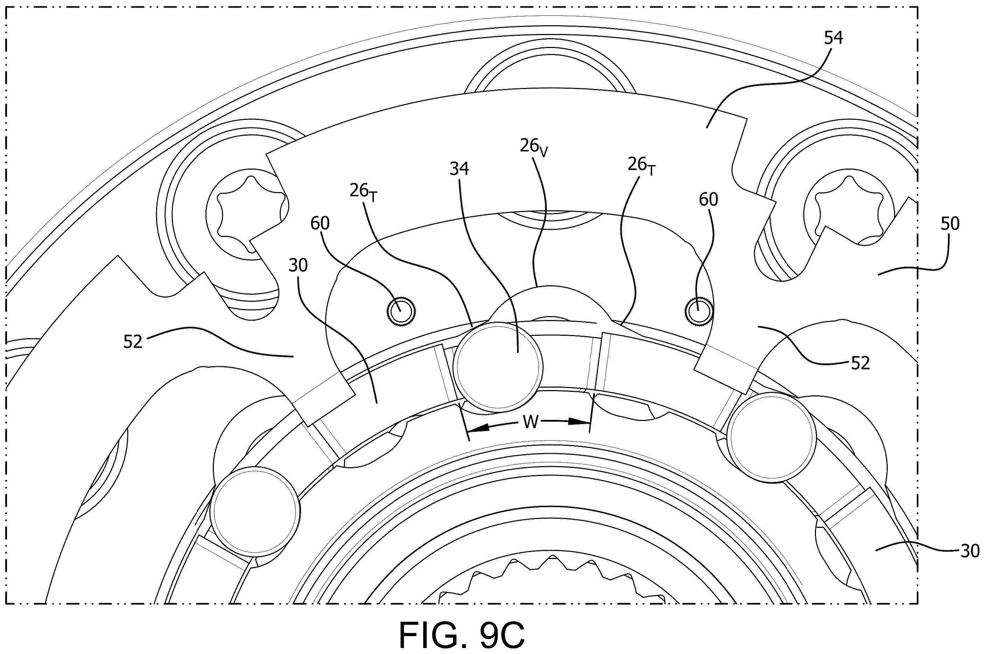

To keep the rolls from moving into the reverse engagement position (i.e., to prevent the rolls from transitioning from the rear tapered portions 26_{T} on one side of the valley 26v to the forward tapered portions 26_{T} on the other side of that valley 26v) the slots 32 of the roll cage 30 have a width W (FIG. 9C) that is sized so that the roll 34 cannot engage the forward tapered portions 26_{T}.Specifically, the width W of the slot is sized to provide engagement by the roll on only one tapered portion at a time. That is, the slot width W is sized, based on the diameter of the roll, to allow sufficient space for the roll to travel only between its engaged position against the tapered portion 26_{T} of the contoured surface and the overrun position (e.g., on the land L in the valley 26v) to allow overrunning. See, FIG. 9D. This prevents the roll during overrunning from moving into engagement with the reverse ramp.

Furthermore, to limit movement of the roll cage 30 relative to the clutch housing 24, the present invention contemplates protrusions or pins 60 on the clutch housing 24 that are positioned at prescribed locations and that extend axially outward from the face of the clutch housing a sufficient distance to contact the fingers 52 of the drag mechanism 50. Since the drag mechanism is coupled to the recesses 56 in the roll cage 30, the pins 60 act to limit the rotation of the roll cage relative to the clutch housing 24. FIG. 9A illustrates the pins 60 when the drag mechanism is not activated or when there is no slippage of the rear wheels. Once the drag mechanism is activated, the drag mechanism indexes the roll cage 30 until at least one of the fingers 52 contacts a pin 60. In this position, the rolls 34 are positioned to engage with (wedge) between the hub 38, 40 and the rear tapered portion 26_{T}.The pins and fingers provide a mechanism for maintaining the position of the roll cage 30 relative to the clutch housing 24, with the width W of the slots 32 permitting the rolls to disengage (overrun) when needed.

Upon reentering a straight path, the rear wheels will be providing traction, and since the front differential is underdriving, the front hubs will continue to rotate at ground speed with no wedging of the rolls since the hubs will still be traveling faster than the clutch housing and thus be overrunning in a straight path.

As discussed above, the contour surface 26 includes reverse-engagement surfaces, which are the tapered portions 26_{T} opposite the forward-engagement surfaces associated with the forward-engagement position. As a result, the clutch is bi-directional, permitting it to be reversibly driven, and functions in reverse exactly the same way as it functions in forward motion. For example, if the vehicle in the illustrated embodiment is shifted to reverse, the input gear would turn the opposite way from the discussion above. Thus, the rolls would engage with the tapered portions 26_{T} associated with the reverse-engagement position. The bi-directional clutch assembly 14 according to the present embodiment permits torque transfer (driving) equally in such a reverse direction. Furthermore, as with the forward driving of the vehicle, the present invention also permits overrunning in the reverse direction.

As should be appreciated, the bi-directional clutch according to the present embodiment also permits backdriving if the roll cage drag mechanism is turned off or not dragging the roll cage. Backdriving can provide particular importance in situations where it is necessary or desirable to prevent the wheels from rotating faster than the input pinion 16. For example, when the vehicle is being operated on a descending slope, the speed of the wheels FW_{L}, FW_{R} may tend to go faster than the speed dictated by the input pinion 16.

It should be apparent that in the reverse-engagement state the overrunning clutch assembly 14 will still operate to permit one wheel to disengage from clutch housing 24 on a turn, but now the faster-moving (outside) wheel is back-driving the motor, while the slower-moving wheel is disengaged.

As shown there are two pins 60 on the clutch housing which are spaced apart so as to permit the bidirectional overrunning operation of the differential.

To help understand the invention, the operation of features of the overrunning clutch in the front drive differential will be discussed.

If no energy is supplied to the coil (i.e., the electromagnetic coil is not activated), the hub and rollers will index automatically to lock-up and drive the differential in both directions (forward or backdrive). The garter spring biases the rolls into the hubs and, as such, they engage with the tapered surfaces of the clutch housing to provide a coupling between the front drive shaft and the front drive axles. In this state, the drag mechanism (armature plate) and roll cage are, essentially, inactive. However in this case, the differential will not overrun because the gear ratios between the rear and front axles are not equal, with the front being driven slower than the rear. The front differential/drive axles will either drive when the rear wheels lose traction or the front wheels will be pushed (driven) by the rear wheels when the rear has traction. The pushing of the front wheels and front drive axles will create binding within the driveline.

As discussed above, the present invention addresses this with use of the drag mechanism. Specifically, when the electromagnetic coil is energized (for example, by activation of a switch), the magnetic field causes the armature plate 50 to drag, and thus index the roll cage 30 relative to the clutch housing 24. Indexing occurs because at the point the coil is activated, the clutch housing 24 will rotate faster than the armature plate and roll cage. This causes the roll cage 30 to index relative to the clutch housing, reorienting the inner contour surface of the clutch housing 24 (the tapered portions) relative to the rolls. The armature plate 50 drag indexes the roll cage until the armature plate 50 hits one of the pins 60 on the clutch housing 24.

At this stage, when the rear wheels are driving, it causes the output hubs 38, 40 on the front drive axles to be driven faster than the clutch housing 34 due to the front-rear ratio difference. The roll cage 30 position is held by the clutch housing 24, this causes the faster rotating hubs 38, 40 to move all rollers into the clutch profile neutral position (unwedged) and on or over the land L where the rolls can then move up and down over the channels 44. This is the overrunning condition which prevents driveline binding. The wide slots 32 allow for the rolls 34 to shift to the neutral position.

When the front wheels are driving, the drag from the armature plate 50 cause the roll cage 30 to index until the armature plate contacts one of the pins 60 on the clutch housing 24. The clutch housing pin 60 drives the armature plate and attached roll cage 30, moving the cage until the side of the roll cage slot 32 contacts the roll 34, effectively locking all parts together. At this point, when one output hub needs to rotate faster than the other hub (for example, traveling in a turn), the faster hub will index the rolls inside of the wide slots 32, causing the rolls 34 to move out of engagement and into the neutral clutch profile 26v. In neutral the rolls 34 will move up and down over the hub channels 44. The slower hub will remain engaged and driving until the speeds of the hubs equalizes.

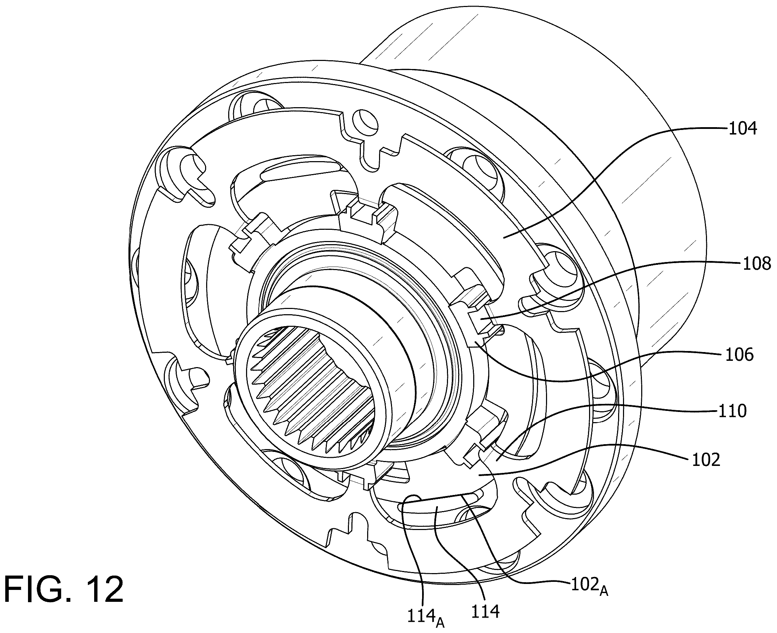

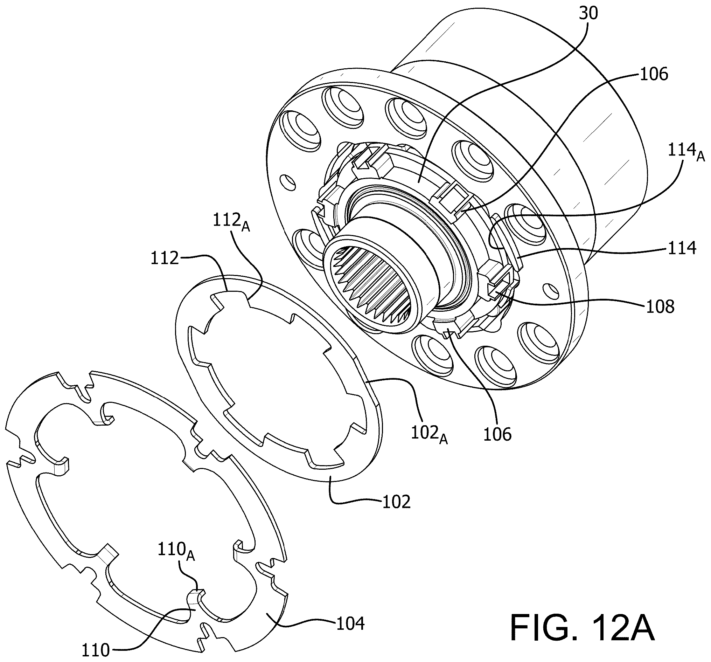

Referring now to FIGS. 12. 12A, 13 and 13A, an alternate embodiment of the drag mechanism 100 is illustrated. In this embodiment, the pins 60 are replaced by a coupler 102 that limits the indexing of the roll cage 30. More particularly, The drag mechanism 100 includes the armature plate 104 as described above that engages with the roll cage 30. In this embodiment, the face of the roll cage 30 includes projections 106 preferably equally spaced about the circumference of the roll cage. Each projection 106 includes a pocket or recess 108 into which a bent portion 110_{A} of the fingers 110 engage, thus coupling the roll cage 30 to the armature plate 104.

The coupler 102 is annular in shape and located between the armature plate 104 and the face of the roll cage 30. The coupler 102 includes a plurality of notches 112 that extend radially outward from the inner diameter of the coupler 102. The notches 112 are spaced circumferentially around the coupler 102, which each notch 112 configured to receive a corresponding projection 106. The width W1 of each notch is larger than the width W2 of the projection 106 such that as the roll cage 30 rotates relative to the coupler 102, the projection 106 will move (rotationally) relative to the notch 112.

The coupler 102 is mounted or coupled to the clutch housing 24 so that it rotates in combination with the clutch housing. In the illustrated embodiment, the clutch housing includes an extension 114 that projects out from the face of the clutch housing 24 toward armature plate 104. The extension 114 includes a first locking surface 114A, which in the illustrated embodiment is a flat surface on the radially inward side of the extension, that engages with a complementary second locking surface 102A on the coupler, which in the illustrated embodiment is a flat surface on the outer circumference of the coupler 102. Thus, when the coupler 102 is placed against the face of the roll cage 30, the second locking surface 102_{A} of the coupler 102 is radially inward from and positioned against the first locking surface 114_{A} of the extension 114, thus, preventing the coupler 102 from rotating relative to the clutch housing 24. A person skilled in the art would readily appreciate that other locking mechanisms for preventing relative rotation between the coupler and the clutch housing can be used.

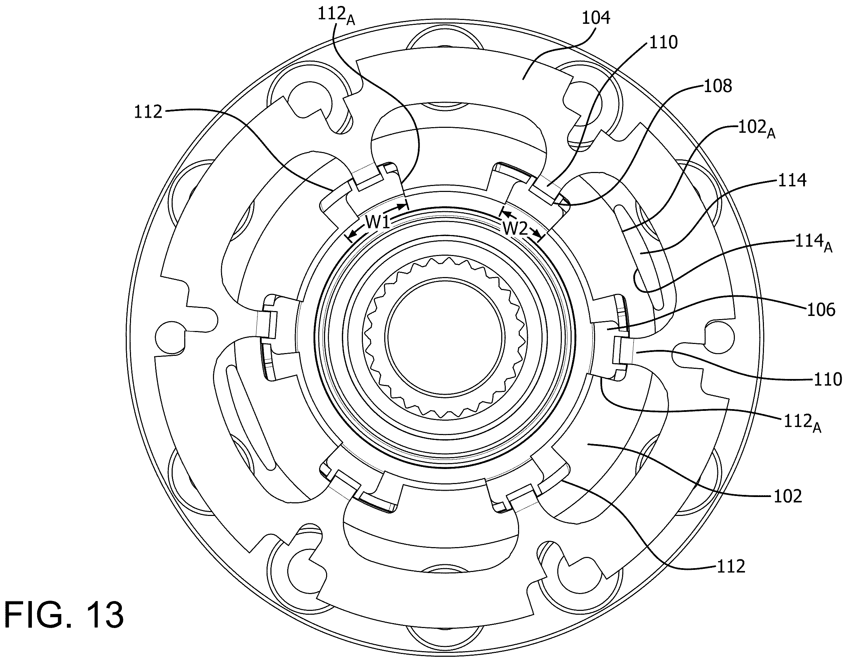

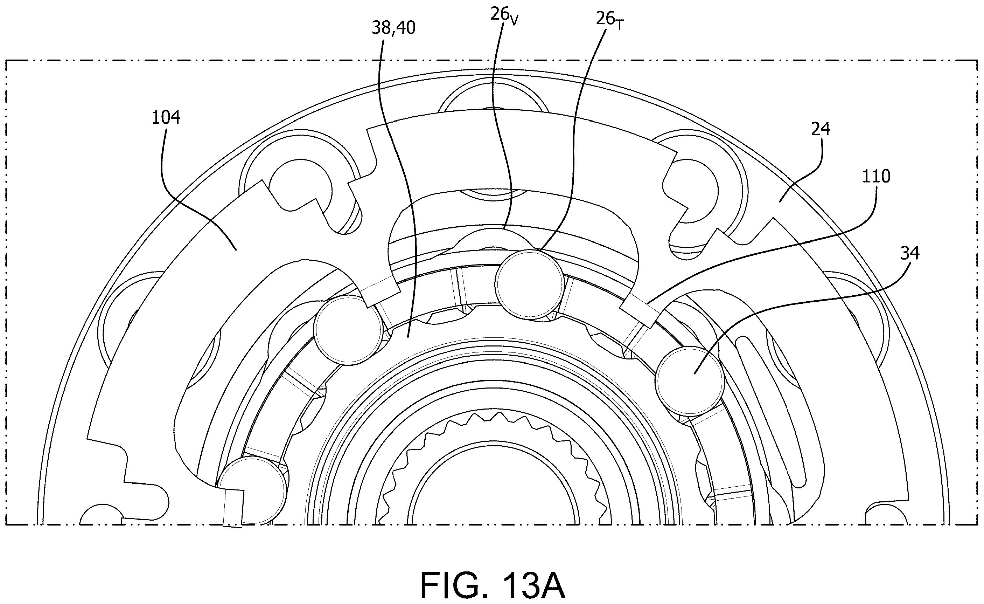

As with the first embodiment of the drag mechanism 50, in this embodiment, the drag mechanism 100 limits movement of the roll cage 30 relative to the clutch housing 24. Specifically, as the roll cage 30 moves relative to the clutch housing 24, the projections 106 rotationally move within the coupler notch 112 until at least one projection 106 contacts a side wall 112_{A} of the notch 112. Since the drag mechanism 100 is coupled to the recesses 108 in the projections 106, the notch side walls 112A limit the rotation of the roll cage 30 relative to the clutch housing 24. FIG. 13 illustrates the drag mechanism 100 after it has indexed the roll cage 30 to the point that one of the projections 106 are in contact with a notch side wall 112_{A}. In this position, the rolls 34 are positioned to engage with (wedge) between the hub 38, 40 and the rear tapered portion 26_{T}.(See, FIG. 13A which shows the position of the rolls 34 relative to the clutch housing 24 with the coupler not shown for clarity.) The projections 106 and notches 112 provide a mechanism for maintaining the position of the roll cage 30 relative to the clutch housing 24, with the width W of the roll cage slots permitting the rolls to disengage (overrun) when needed.

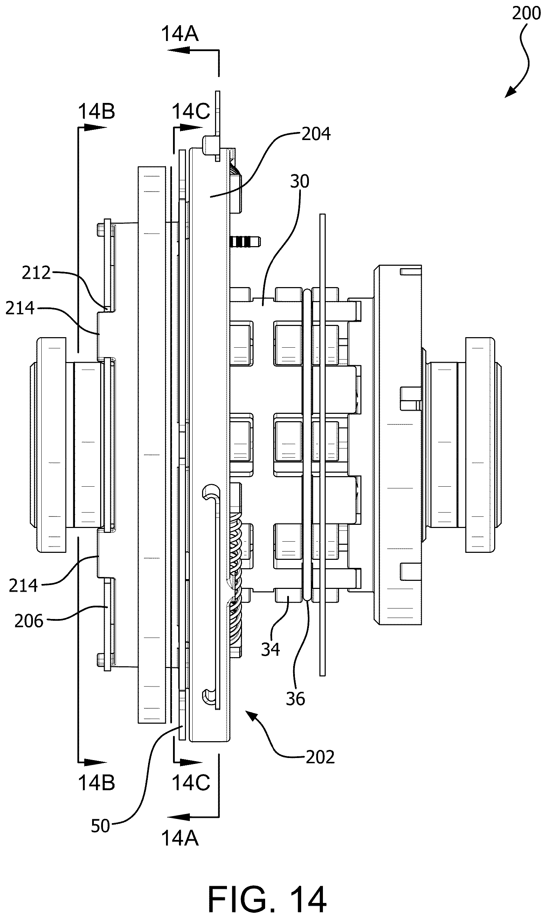

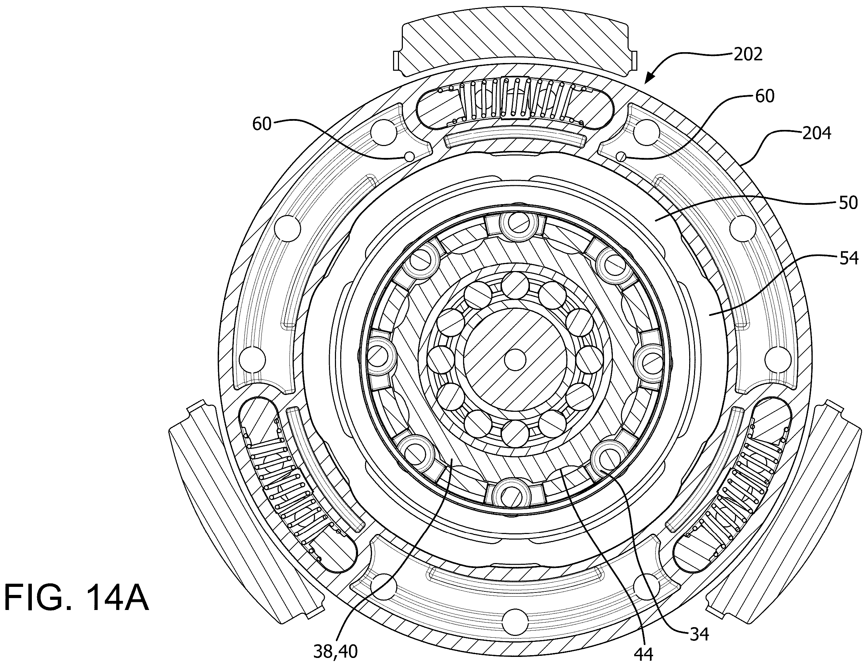

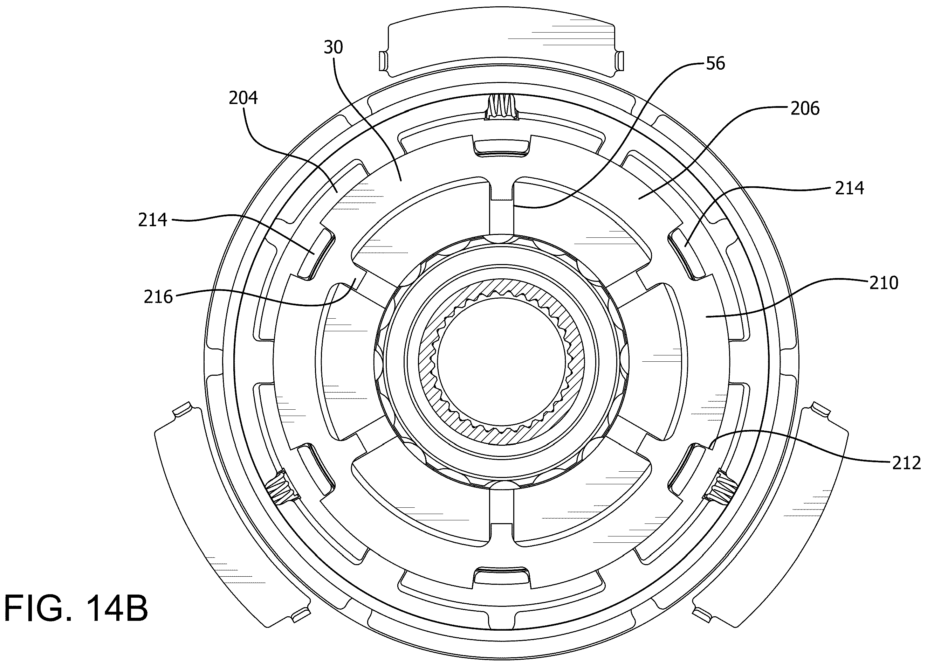

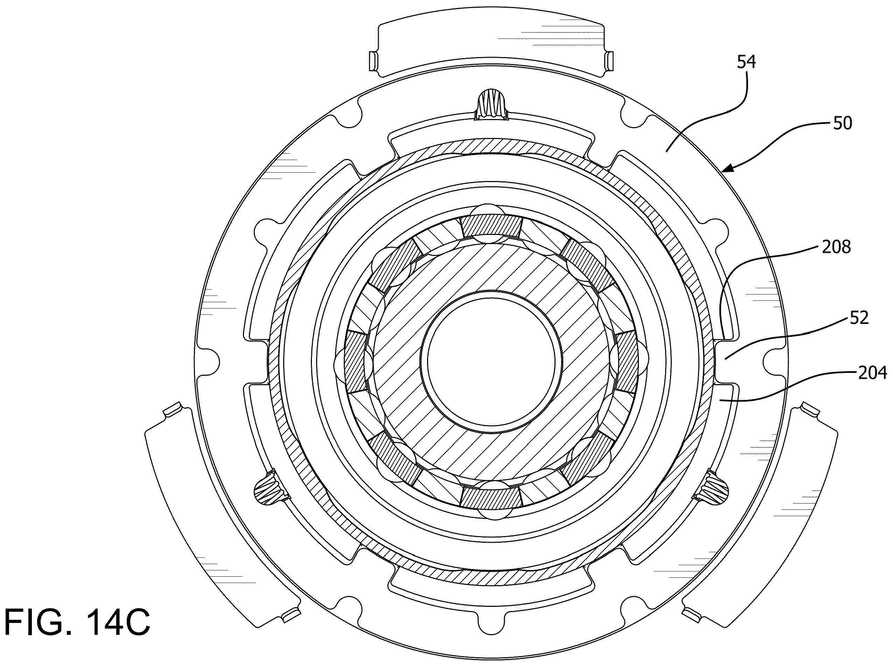

Referring now to FIGS. 14 and 14A-14C, an embodiment 200 of the invention is shown that includes an armature plate retainer 204 for biasing the roll cage 30. The armature retainer 204 provides a coupling between the armature plate 50 and the roll cage 30. More particularly, the armature plate 50 is coupled to the retainer which, in turn, is coupled to a cage plate 206 that is connected to the roll cage 30. The armature plate 50 may be coupled to the retainer through any conventional means. For example, in the illustrated embodiment, the armature plate 50 includes tabs of fingers 52 that extend radially inward from the outer ring 54. the fingers or tabs 53 engage with notches 208 that are formed in the retainer 204 at circumferentially spaced apart locations. Thus, the armature plate 50 and the retainer 204 rotate in combination.

The cage plate 206 is located adjacent to an axial face of the retainer 204 and the roll cage 30. The cage plate 206 can be connected or coupled to the retainer 204 through any means so that the cage plate 206 rotates with the retainer 204 (including being formed integral with the retainer.) In the illustrated embodiment, the cage plate 206 includes an annular ring 210 with outer notches 212 spaced apart around its periphery. The outer notches 212 engage with projections 214 that protrude out from the face of the retainer so as to prevent relative rotation. The cage pate 206, thus rotates with the retainer 204.

The cage plate 206 also includes a plurality of plate fingers 216 that project radially inward from the ring 212. The plate fingers 216 engage with the recesses 56 in the face of the roll cage 30 as described previously.

As such, the armature plate 50 is coupled to the roll cage 30 through the retainer 204.

In this embodiment, the pins or projections 60 are used to limit the roll cage 30 index like the first embodiment but does not directly touch the armature plate. Instead, the pins 60 contact the retainer 204 to limit the rotation of the roll cage 30. A representative embodiment of a retainer assembly for a overrunning clutch that can be adapted for use in this system is described in US Patent 8857294 which is incorporated herein by reference.

While the above embodiments use an electromagnetic coil to drag the armature plate as one way to achieve index the roll cage, the invention contemplates other ways of achieving the dragging (indexing) including using a spring energized drag on plates with activation of an electromagnet coil to release the drag; spring energized drag on plates with a linear actuator engagement for releasing. These types of drag mechanisms are described in US Patent Nos. 10,150,369 and 11,047,464, which are incorporated herein by reference.

For the purposes of promoting an understanding of the principles of the invention, reference has been made to the preferred embodiments illustrated in the drawings, and specific language has been used to describe these embodiments. However, no limitation of the scope of the invention is intended by this specific language, and the invention should be construed to encompass all embodiments that would normally occur to one of ordinary skill in the art.

The particular implementations shown and described herein are illustrative examples of the invention and are not intended to otherwise limit the scope of the invention in any way. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those skilled in this art without departing from the spirit and scope of the invention.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening.

The recitation of ranges of values herein are merely intended to serve as a shorthand method of referring individually to each separate value falling within the range, unless otherwise indicated herein, and each separate value is incorporated into the specification as if it were individually recited herein.

Terms such as "about" or "approximately", unless otherwise defined or restricted in the specification, should be understood to define a variance of plus or minus 5%-10% to the numerical term referred to.

All methods described herein can be performed in any suitable order unless otherwise indicated herein or otherwise clearly contradicted by context. The use of any and all examples, or exemplary language (e.g., "such as") provided herein, is intended merely to better illuminate embodiments of the invention and does not impose a limitation on the scope of the invention unless otherwise claimed. The various embodiments and elements can be interchanged or combined in any suitable manner as necessary.

The use of directions, such as forward, rearward, top and bottom, upper and lower are with reference to the embodiments shown in the drawings and, thus, should not be taken as restrictive. Reversing or flipping the embodiments in the drawings would, of course, result in consistent reversal or flipping of the terminology.

No language in the specification should be construed as indicating any non-claimed element as essential to the practice of the invention.

It will be apparent to those skilled in the art that various modifications and variations can be made to the present invention without departing from the spirit and scope of the invention. There is no intention to limit the invention to the specific form or forms disclosed, but on the contrary, the intention is to cover all modifications, alternative constructions, and equivalents falling within the spirit and scope of the invention, as defined in the appended claims. Thus, it is intended that the present invention cover the modifications and variations of this invention provided they come within the scope of the appended claims and their equivalent.

## Claims

1. A front drive differential comprising:
a differential housing;
an input pinion having a pinion gear and a pinion input shaft attached to the pinion gear, the pinion gear located within the differential housing and the pinion input shaft extends out of an opening in the differential housing, the pinion input shaft configured to operably engage with a drive shaft so as to permit the drive shaft to rotate the pinion shaft;
a ring gear engaged to the pinion gear;
a bi-directional overrunning clutch assembly located within the differential housing and configured to engage with at least one drive axle segment, the bi-directional overrunning clutch assembly configured to transmit torque, when engaged, between the pinion gear and the drive axle segments, the bi-directional overrunning clutch assembly including:
a clutch housing attached to or formed integral with the ring gear wherein the ring gear is positioned radially outward from an inner surface of the clutch housing, the inner surface having a contoured surface formed on at least a portion of the inner surface, the clutch housing having a clutch housing axis;
a roller clutch assembly located radially inward from the inner surface of the clutch housing, the roller clutch assembly including:
a roll cage with a plurality of spaced apart slots that extend radially through the roll cage from its outer surface to its inner surface, the slots located circumferentially around the roll cage, the roll cage having a roll cage axis that is coaxial with the clutch housing axis,
a plurality of rolls, each roll of the plurality of rolls located in one of the slots of the plurality of spaced apart slots and sized so that each roll can move within the each slot in the circumferential direction about the roll cage axis,
at least one spring biasing each roll against movement radially outward relative to the slot, and
a drag mechanism positioned against and coupled to the roll cage, the drag mechanism is configured to index the roll cage so as to prevent binding; and
two hubs located radially inward of the roller clutch assembly, the hubs being axially aligned with one another so as to rotate about a common longitudinal axis which is coaxial with the roll cage axis, each hub configured to engage with an end of a corresponding drive axle segment, each hub located radially inward from a plurality of the rolls, each hub having a contoured exterior portion with a plurality of recessed channels formed on the contoured exterior portion of each hub, each recessed channel of the plurality of recessed channels extending axially along the contoured exterior portion parallel to the longitudinal axis of the associated hub, each recessed channel being sized so that a portion of one of the rolls of the plurality of rolls can seat within the recessed channel, the plurality of recessed channels are spaced about the circumference of the contoured exterior portion of each hub, the contoured exterior portion including a plurality of lands, each land of the plurality of lands being located between adjacent channels on the associated hub;
wherein the at least one spring biasing each roll into one of the recessed channels when the roll is not overrunning, the biasing of each roll into one of the recessed channels providing a connection between each roll and the associated hub so as to cause each roll to initially move with the associated hub.

2. The front drive differential of claim 1, wherein the roll cage is a one-piece roll cage.

3. The front drive differential of either of claims 1 or 2, wherein the drag mechanism includes an armature plate with a plurality of tangs or fingers extending radially from an outer ring.

4. The front drive differential of claim 3, wherein at least one tang of the plurality of tangs includes an end portion operatively coupled to the roll cage, and wherein the roll cage includes a recess, and the tang is has an end portion which engages with the recess of the roll cage so that the armature plate and the roll cage rotate in combination.

5. The front drive differential of either of claims 3 or 4, further comprising at least one protrusion on the clutch housing that extends axially outward from an axial face of the clutch housing and located such that the tangs of the armature plate will contact the at least one protrusion when the armature plate rotates a predetermined amount relative to the clutch housing, and wherein the at least one protrusion is located so as to limit the rotation of the roll cage relative to the clutch housing by preventing relative rotation of the armature plate relative to clutch housing.

6. The front drive differential of claim 3, wherein the drag mechanism further includes a coupler located between the armature plate and the roll cage, the armature plate engaged to the roll cage.

7. The front drive differential of claim 6, wherein the coupler is annular in shape and includes a plurality of notches that extend radially outward from an inner diameter of the coupler, and wherein the roll cage includes a plurality of projections that extend axially outward from a face of the roll cage.

8. The front drive differential of claim 7, wherein the plurality of notches are spaced circumferentially around the coupler, wherein the plurality of projections are spaced circumferentially around the face of the roll cage, and wherein each notch of the plurality of notches is configured to receive a corresponding projection of the plurality of projections.

9. The front drive differential of claim 8, wherein each notch has a notch width that is larger than a projection width of each corresponding projection so as to permit rotation of the roll cage relative to the coupler until at least one of the projections contacts a surface of the associated notch.

10. The front drive differential of claim 9, wherein at least one tang of the plurality of tangs includes an end portion that is engaged with a recess in at least one of the projections.

11. The front drive differential of any of claims 6-10, wherein the coupler is coupled to the clutch housing such that the coupler rotates with the clutch housing.

12. The front drive differential of claim 11, wherein the coupling is provided by an extension protruding from a face of the clutch housing toward the armature plate, the extension contacting a surface on the coupler such that the coupler rotates with the clutch housing.

13. The front drive differential of claim 3, wherein the drag mechanism includes a retainer, the retainer is positioned adjacent to an axial face of the clutch housing, the retainer being rotatable relative to the clutch housing and coupled to the roll cage such that rotation of the roll cage causes the retainer to rotate relative to the clutch housing.

14. The front drive differential of claim 13, further comprising at least one protrusion extending axially outward from the face of the clutch housing toward the retainer, the at least one protrusion positioned to contact the retainer when the retainer rotates a predetermined amount relative to the clutch housing so as to limit rotation of the roll cage; and wherein the at least one protrusion is located so as to limit the rotation of the roll cage relative to the clutch housing by preventing the rotation of the retainer relative to the clutch housing.

15. The front drive differential of claim 14, wherein each tang of the plurality of tangs engages with a notch formed on the retainer so that the retainer and armature plate rotate in combination, and further comprising a cage plate coupled to the retainer, the cage plate engaging with the roll cage so that the cage plate and roll cage rotate in combination.

16. The front drive differential of any of claims 3-15, wherein the drag mechanism further includes an electromagnetic coil which, when energized, drags the armature plate and drags the roll cage relative to the clutch housing.

17. The front drive differential of any of the preceding claims, wherein when at least one of the hubs is rotating faster than the clutch housing the rolls associated with that hub are able to move out of the channels and onto the lands of the exterior contoured surface and back into the channels as that hub rotates.

18. A differential assembly for a four wheel drive vehicle, the four wheel drive vehicle having a front drive axle and a rear drive axle, the front drive axle comprising a front drive differential according to any of the preceding claims wherein the front drive differential has a gear ratio that causes the clutch housing to rotate slower than a ring gear in a differential on the rear drive axle.

19. A four wheel drive vehicle comprising:
a motor operably coupled to a transmission, the transmission configured to transmit power from the engine to front and rear drive shafts;
the front drive shaft having a first end operably connected to the transmission for receiving rotary motion from the transmission, and a second end connected to the front drive differential of any of the preceding claims;
wherein each drive axle segment has one end connected to a ground engaging wheel and the opposite end connected to one of the hubs;
wherein the front drive differential is operable for transmitting torque from the front drive shaft to the wheels;
the rear drive shaft having a first end operably connected to the transmission for receiving rotary motion from the transmission, and a second end connected to a rear drive differential, the rear drive differential being operably connected to two rear drive axle segments, each rear drive axle segment has one end connected to a ground engaging rear wheel and the opposite end connected to the rear drive differential.
wherein the rear drive differential is operable for transmitting torque from the rear drive shaft to the rear wheels; and
wherein the front drive differential has a gear ratio that causes the clutch housing to rotate slower than a ring gear in the rear drive differential.
